# FASCICULE DE BREVET EUROPEEN

(11) **EP 3 549 281 B1**
(45) Date de publication et mention de la délivrance du brevet: **26.08.2020**
(21) Numéro de dépôt: 17812010.1
(22) Date de dépôt: 20.11.2017
(51) Int. Cl.: H04B 10/116, F21V 7/00, F21K 9/233

(54) **DISPOSITIF D'ÉCLAIRAGE ET DE COMMUNICATION OPTIQUE COMBINÉS À VISUALISATION DU CHAMP DE COMMUNICATION**
VORRICHTUNG ZUR BELEUCHTUNG UND OPTISCHEN KOMMUNIKATION IN KOMBINATION MIT DER ANSICHT DES KOMMUNIKATIONSFELDES
DEVICE FOR LIGHTING AND OPTICAL COMMUNICATION COMBINED WITH VIEWING OF THE COMMUNICATION FIELD

(30) Priorité: 29.11.2016 FR 1661655
(43) Date de publication de la demande: 09.10.2019
(73) Titulaire: ORANGE, 75015 Paris (FR)
(72) Inventeur: DUSSAUME, Philippe, 92326 Châtillon Cedex (FR); PERRUFEL, Micheline, 92326 Châtillon Cedex (FR); CUTULLIC, Christophe, 92326 Châtillon Cedex (FR)
(86) Numéro de dépôt international: PCT/FR2017/053179
(87) Numéro de publication internationale: WO 2018/100266

(56) Documents cités:
- EP-A1- 3 073 650
- WO-A1-2005/108853
- WO-A1-2008/010274
- WO-A1-2015/148562
- US-A1- 2014 254 154

## Description

### DOMAINE TECHNIQUE

La présente invention se rapporte au domaine des communications sans fil et plus particulièrement au domaine des transmissions de données basées sur l'utilisation de la lumière, dans la gamme des longueurs d'onde du visible ou proches du visible, comme l'ultra-violet ou l'infrarouge.

### ART ANTÉRIEUR

Des progrès importants ont été réalisés depuis plusieurs années dans le domaine des communications sans fil. En particulier, des standards de connexion tels que la 4G, le Wifi, Wimax ou encore le Bluetooth permettent aux utilisateurs d'accéder à toutes sortes de services en ligne avec une très bonne qualité de service. Ces technologies reposent sur l'utilisation du spectre électromagnétique pour transmettre les données.

On observe aujourd'hui l'émergence de technologies permettant de transmettre des données à haut débit par modulation de la lumière visible émise par des luminaires tels que par exemple des lampes à LEDs (diodes électroluminescentes ou Light Emitting Diode en anglais). Le LiFi (Light Fidelity) est un exemple de standard de communication sans fil basé sur l'utilisation de la lumière visible ou proche du visible.

Ces technologies de transmission présentent de nombreux avantages. Elles permettent, en tirant partie des nombreux points d'éclairages installés dans les habitations, les bureaux, les transports ou les lieux publics, de multiplier les points d'accès réseau sans risque de saturation des fréquences dans le spectre électromagnétique. Elles présentent également un intérêt pour la sécurité car la zone de couverture est visible à l'œil nu et limitée à la zone d'éclairage. Ainsi, de telles lampes installées par exemple au-dessus de bureaux aménagés dans un espace ouvert (« open space ») permettent notamment de garantir que seuls les équipements directement éclairés par ces lampes pourront bénéficier de la connexion.

Le document EP 3 073 650 concerne un dispositif d'éclairage qui combine au moins une première source lumineuse dédiée à l'éclairage et au moins une deuxième source lumineuse dédiée à la transmission de données par modulation de la lumière. Des premier et deuxième dispositifs optiques réfracteurs sont positionnés respectivement par rapport auxdites première et deuxième sources lumineuses, de façon à capter la lumière émise par lesdites sources et former respectivement des premier et deuxième faisceaux lumineux distincts, ledit deuxième faisceau lumineux délimitant une zone adaptée pour la transmission de données.

Un inconvénient de ces lampes réside toutefois dans le fait que les utilisateurs ont des difficultés à identifier rapidement et facilement si une lampe est susceptible de fournir ou non à un moment donné le service de transmission de données.

### RÉSUMÉ DE L'INVENTION

À cet effet, l'invention concerne un dispositif d'éclairage comprenant :
- au moins une première source lumineuse dédiée à l'éclairage,
- au moins une deuxième source lumineuse dédiée à la transmission de données par modulation de la lumière,
- des premier et deuxième dispositifs optiques réfracteurs positionnés respectivement par rapport auxdites première et deuxième sources lumineuses, de façon à capter la lumière émise par lesdites sources et former respectivement des premier et deuxième faisceaux lumineux distincts, ledit deuxième faisceau lumineux délimitant une zone adaptée pour la transmission de données.

Un tel dispositif d'éclairage est remarquable en ce qu'il comporte un dispositif variateur de luminosité et/ou de couleur du premier faisceau lumineux, qui est adapté pour accentuer ou diminuer la visibilité de la zone de transmission de données délimitée par le deuxième faisceau lumineux, le dispositif variateur étant activé lorsque la première source lumineuse est maintenue en position fixe.

L'avantage du dispositif d'éclairage selon l'invention est qu'il permet de procurer un éclairage ambiant satisfaisant tout en signalant de façon explicite pour l'utilisateur, grâce aux variations de luminosité et/ou d'éclairage du premier faisceau lumineux, le contour de la zone de transmission de données, ainsi que la disponibilité ou l'indisponibilité du service de transmission de données fourni dans cette zone. Un autre avantage du dispositif d'éclairage selon l'invention est qu'il ne nécessite pas de parties qui sont rendues mobiles dans le but de modifier l'aspect visuel d'un faisceau lumineux dédié à l'éclairage.

Dans une variante, les sources lumineuses assurent la double fonction d'éclairage et de transmission de données.

Selon un mode particulier de réalisation, le dispositif d'éclairage est tel que les sources lumineuses sont des LEDs.

Le dispositif d'éclairage peut utiliser des LEDs pour la fonction d'éclairage et de transmission de données. Les LEDs sont particulièrement adaptées à la transmission de données car elles sont peu onéreuses, compactes, consomment peu d'énergie et présentent une capacité de modulation de la lumière à haute fréquence autorisant des débits de transmission élevés.

Selon un autre mode de réalisation particulier, le dispositif variateur de luminosité et/ou de couleur du premier faisceau lumineux est désactivé à l'établissement d'une session de communication, par un terminal de communication, dans la zone adaptée à la transmission de données, et respectivement activé à la fin de ladite session.

Selon un autre mode de réalisation particulier, le dispositif variateur de luminosité et/ou de couleur du premier faisceau lumineux est désactivé dans le cas où un nombre de sessions de communication dans la zone adaptée à la transmission de données est égal à un seuil prédéterminé et respectivement activé dans le cas où un nombre de sessions de communication dans la zone adaptée à la transmission de données est inférieur audit seuil prédéterminé.

Selon un autre mode de réalisation particulier, le dispositif variateur de luminosité et/ou de couleur du premier faisceau lumineux est désactivé dans le cas où le service de transmission de données dans la zone adaptée à la transmission de données est indisponible et respectivement activé dans le cas où ledit service de transmission de données est rendu disponible.

Une telle disposition conforme aux trois modes de réalisation qui viennent d'être mentionnés permet ainsi à tout utilisateur qui souhaiterait se connecter dans la zone de transmission de données, d'identifier rapidement et distinctement la disponibilité ou l'indisponibilité de cette zone.

Selon un autre mode de réalisation particulier, le dispositif d'éclairage comprend en outre un dispositif de pilotage du dispositif variateur de luminosité et/ou de couleur du premier faisceau lumineux, qui est adapté pour régler un ou plusieurs paramètres de variation de luminosité et/ou de couleur appliqués par le dispositif variateur.

De tels paramètres sont par exemple :
- le séquencement de la variation de luminosité et/ou de couleur du premier faisceau lumineux,
- la vitesse du séquencement,
- l'amplitude de la variation de luminosité et/ou de couleur du premier faisceau lumineux,
- etc..

Une telle disposition permet ainsi de disposer d'une large palette de variations possibles à appliquer au faisceau lumineux émis par la source lumineuse dédiée à l'éclairage, sans nécessiter un quelconque déplacement de cette source lumineuse. En faisant varier un ou plusieurs des paramètres précités, différents effets lumineux peuvent être produits, avec un impact sur l'éclairage de la zone de transmission de données, dont l'effet est d'améliorer ainsi l'identification de la zone de transmission de données.

Selon un autre mode de réalisation particulier, le dispositif d'éclairage comprend un plateau qui comporte une zone centrale et une zone périphérique et dans lequel :
- un premier ensemble de sources lumineuses est agencé dans la zone centrale,
- un second ensemble de sources lumineuses est agencé dans la zone périphérique,
les sources lumineuses d'un des ensembles étant dédiées à l'éclairage et les sources lumineuses de l'autre ensemble étant dédiées à la transmission de données par modulation de la lumière,
un dispositif optique réfracteur étant positionné devant chaque source lumineuse.

Le dispositif d'éclairage comprend un plateau sur lequel sont implantées des sources lumineuses. Il peut s'agir par exemple d'une plaque de circuit imprimé sur lequel sont implantées des LEDs. Une partie des sources lumineuses, par exemple celles situées au centre du plateau, est adaptée pour transmettre des données sous la forme d'un signal optique. L'autre partie des sources lumineuses, implantée par exemple en périphérie du plateau, offre une fonction d'éclairage classique.

Le dispositif d'éclairage comporte en outre une pluralité de dispositifs optiques réfracteurs disposés devant les sources lumineuses. Les dispositifs optiques réfracteurs destinés à la partie centrale peuvent avoir des caractéristiques différentes des dispositifs optiques réfracteurs destinés à la partie périphérique afin de produire des faisceaux dont les caractéristiques sont différentes. Ainsi, par exemple, les dispositifs optiques réfracteurs de la partie centrale sont par exemple des lentilles parfaites, tandis que les dispositifs optiques réfracteurs de la partie périphérique sont des lentilles déformantes présentant des irrégularités. Un unique dispositif d'éclairage selon l'invention permet ainsi de procurer un éclairage ambiant satisfaisant tout en garantissant un transfert de données optimal vers un emplacement spécifique.

Selon une variante de réalisation, au moins deux dispositifs réfracteurs positionnés devant respectivement deux sources lumineuses dédiées à l'éclairage sont de type différent.

De cette manière, au moins deux lentilles déformantes présentent des irrégularités qui sont différentes d'une lentille déformante à l'autre.

De tels dispositifs optiques réfracteurs sont ainsi positionnés de façon à capter la lumière issue des sources lumineuses et former un faisceau de lumière dont les caractéristiques dépendent des dispositifs optiques réfracteurs utilisés. Ainsi, les sources lumineuses adaptées pour l'éclairage seul peuvent disposer de dispositifs réfracteurs différents les uns des autres et émettre ainsi respectivement des faisceaux lumineux différents les uns des autres, alors que la lumière issue des sources lumineuses aptes à transmettre des données peut être concentrée en un faisceau permettant de cibler un emplacement particulier.

Selon un autre mode de réalisation particulier, le dispositif d'éclairage comprend un plateau sur lequel sont montées :
- au moins une source lumineuse dédiée à la transmission de données par modulation de la lumière, devant laquelle est positionné un dispositif optique réfracteur, l'axe de diffusion de la lumière émise par ladite au moins une source étant orienté vers l'extérieur du dispositif d'éclairage,
- au moins une source lumineuse dédiée à l'éclairage, devant laquelle est positionné un dispositif optique réflecteur, l'axe de diffusion de la lumière émise par ladite au moins une source lumineuse dédiée à l'éclairage étant orienté dans le sens opposé à l'axe de diffusion de la lumière émise par ladite au moins une source lumineuse dédiée à la transmission de données par modulation de la lumière.

Le dispositif d'éclairage comprend un plateau sur lequel sont implantées des sources lumineuses. Il peut s'agir par exemple d'une plaque de circuit imprimé sur chacune des faces de laquelle sont implantées des LEDs. La ou les sources lumineuses situées sur la face orientée vers l'extérieur du dispositif d'éclairage est/sont adaptée(s) pour transmettre des données sous la forme d'un signal optique. La ou les sources lumineuses situées sur la face orientée vers l'intérieur du dispositif d'éclairage offre une fonction d'éclairage classique.

Le dispositif d'éclairage comporte en outre un dispositif optique réfracteur disposé devant chaque source lumineuse dédiée à la transmission de données et un dispositif réflecteur devant chaque source lumineuse dédiée à l'éclairage. Les dispositifs optiques réflecteurs forment par exemple un ensemble de plaquettes constituées d'une matière réfléchissante (ex : matière plastique) qui sont agencées les unes par rapport aux autres pour se conformer à la zone de diffusion de lumière indirecte.

Une telle disposition permet ainsi d'obtenir un dispositif d'éclairage particulièrement compact, sans nuire à la qualité de l'éclairage ambiant et à l'optimisation du transfert de données vers un emplacement spécifique.

Selon un autre mode de réalisation particulier, le dispositif d'éclairage comprend en outre un dispositif optique réfracteur qui est disposé sur le trajet d'au moins un rayon lumineux réfléchi par le dispositif réflecteur positionné devant ladite au moins une source lumineuse dédiée à l'éclairage.

Un tel dispositif optique réfracteur est agencé dans le dispositif d'éclairage de façon à capter la lumière réfléchie par les dispositifs réflecteurs et à la diffuser sous la forme d'une pluralité de faisceaux lumineux concentrés autour du faisceau lumineux émis par la ou les sources lumineuses dédiées à la transmission de données, l'angle d'ouverture de la pluralité de faisceaux lumineux émis par la pluralité de sources lumineuses ayant un angle d'ouverture différent de celui du faisceau lumineux émis par la ou les sources lumineuses dédiées à la transmission de données.

Selon un autre mode de réalisation particulier, le plateau du dispositif d'éclairage constitue le dispositif réflecteur positionné devant ladite au moins une source lumineuse dédiée à l'éclairage.

Une telle disposition optimise la compacité de la structure du dispositif d'éclairage.

### LISTE DES FIGURES

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- La figure 1 représente une vue éclatée d'un assemblage de différents éléments optiques et d'éclairage composant le dispositif d'éclairage selon un premier mode de réalisation,
- La figure 2 représente une vue de côté du dispositif d'éclairage de la figure 1, une coupe de l'assemblage de la figure 2 étant représentée en arrachement,
- La figure 3 représente une vue en perspective du dispositif d'éclairage de la figure 1,
- La figure 4 représente une partie de la figure 2 illustrant le dispositif d'éclairage en fonctionnement, sur laquelle est représentée une pluralité de faisceaux de lumière de caractéristiques différentes émis par ce dernier,
- La figure 5 illustre de manière simplifiée et non limitative un assemblage de composants électroniques adapté pour fournir une fonction d'éclairage seul et une fonction d'éclairage avec transmission de données, ainsi qu'une fonction de variation de luminosité et/ou de couleur selon un mode particulier de réalisation de l'invention,
- La figure 6 représente une vue en coupe d'un dispositif d'éclairage selon un deuxième mode de réalisation de l'invention, sur laquelle sont illustrés les détails d'un assemblage de différents éléments optiques et d'éclairage composant le dispositif d'éclairage, dans lequel des éléments optiques sont dans une première position de fonctionnement,
- La figure 7 représente une vue en coupe d'un dispositif d'éclairage selon un deuxième mode de réalisation de l'invention, sur laquelle sont illustrés les détails d'un assemblage de différents éléments optiques et d'éclairage composant le dispositif d'éclairage, dans lequel des éléments optiques sont dans une deuxième position de fonctionnement,
- La figure 8 représente une vue en perspective du dispositif d'éclairage selon le deuxième mode de réalisation,
- Les figures 9A et 9B représentent respectivement des vues en coupe et de dessus d'un dispositif optique réflecteur appartenant au dispositif d'éclairage selon le deuxième mode de réalisation,
- Les figure 10A à 10C représentent chacune une vue en coupe du dispositif d'éclairage de la figure 8, lorsque le dispositif d'éclairage est en fonctionnement, selon respectivement trois modes d'éclairage différents.

### DESCRIPTION DÉTAILLÉE

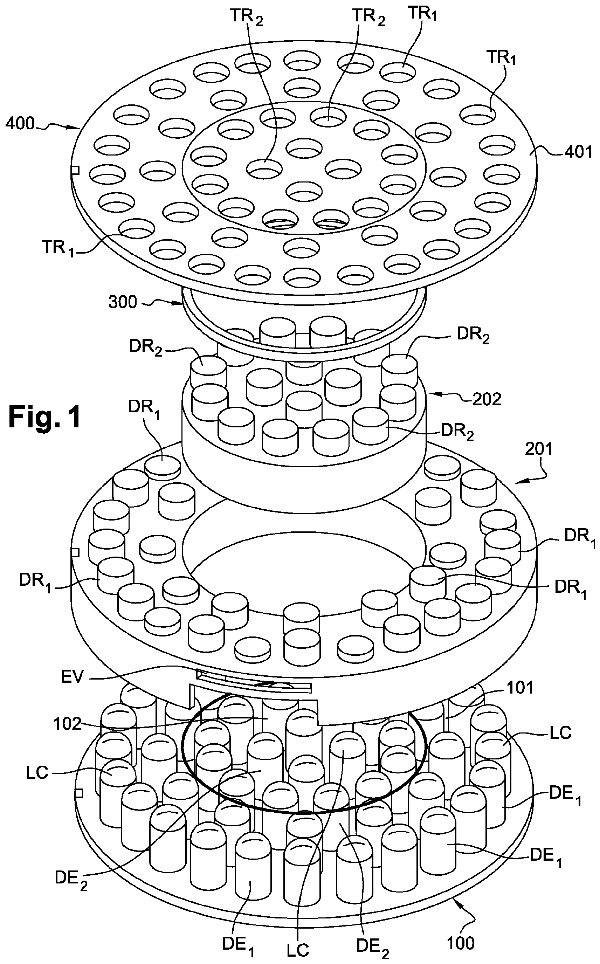

En référence à la figure 1, est représentée une vue éclatée d'un assemblage de différents éléments optiques et d'éclairage composant le dispositif d'éclairage selon un premier mode de réalisation de l'invention.

Sur un plateau 100, par exemple de forme circulaire et comprenant un circuit imprimé, sont implantées des sources lumineuses, comme par exemple des diodes électroluminescentes DE₁, DE₂. Pour des raisons de clarté de la figure, certaines diodes seulement sont signalées par la référence DE₁ ou DE₂. La zone périphérique 101 du plateau 100, définie par au moins la première couronne de diodes située le plus près du bord du plateau, supporte un ensemble de premières diodes DE₁ dédiées uniquement à l'éclairage. Dans l'exemple représenté, une première et une deuxième couronne de diodes dédiées à l'éclairage définissent la zone périphérique 101 du plateau 100. La zone restante du plateau 100, appelée zone centrale 102, supporte quant à elle un ensemble de deuxièmes diodes électroluminescentes DE₂ adaptées pour la transmission de données dans le spectre optique. De telles diodes DE₂ sont aptes à transmettre des données par modulation de la lumière visible ou proche du visible. Pour cela, ces diodes sont par exemple reliées à un composant de modulation adapté (non représenté), comme par exemple le microcontrôleur RL78/I1A commercialisé par la société Renesas™. La zone périphérique 101 et la zone centrale 102 peuvent comprendre chacune une ou plusieurs diodes électroluminescentes.

Selon un autre mode de réalisation, les diodes électroluminescentes permettant de transmettre des données sont situées dans la zone périphérique 101 alors que les diodes électroluminescentes participant uniquement à l'éclairage sont situées dans la zone centrale 102.

Selon un autre mode de réalisation, les diodes électroluminescentes DE₂ qui permettent de transmettre des données, participent également à l'éclairage.

Des lentilles convergentes LC sont montées sur le plateau 100 de façon à ce que chaque lentille soit positionnée en regard d'une diode électroluminescente DE₁ ou DE₂ correspondante. Ainsi, la lumière émise par chacune des diodes électroluminescentes DE₁ ou DE₂ est reçue par une lentille LC et redirigée en un faisceau convergent. Pour des raisons de clarté de la figure, certaines lentilles seulement sont signalées par la référence LC.

Selon une réalisation particulière, les lentilles LC de la zone périphérique 101 et celles de la zone centrale 102 ont des caractéristiques optiques différentes.

Selon un mode particulier de réalisation, les lentilles convergentes sont directement intégrées dans les diodes électroluminescentes DE₁ ou DE₂. Il peut s'agir par exemple de diodes électroluminescentes disposant d'une optique intégrée ou de diodes électroluminescentes auxquelles sont ajoutées des lentilles, à l'aide d'un porte-lentille.

Conformément à l'invention, le dispositif d'éclairage comprend en outre :
- un premier élément 201 adapté à la zone périphérique 101 du plateau 100 et comportant un premier ensemble de dispositifs réfracteurs DR₁ disposés chacun dans l'axe d'une diode électroluminescente DE₁ correspondante de la zone périphérique 101, et
- un second élément 202 adapté à la zone centrale 102 du plateau 100 et comportant un second ensemble de dispositifs réfracteurs DR₂ disposés chacun dans l'axe d'une diode électroluminescente DE₂ correspondante de la zone centrale 102.

Pour des raisons de clarté de la figure, certains dispositifs réfracteurs seulement sont signalés par la référence DR₁ ou DR₂.

Selon un mode de réalisation particulier, le premier élément 201 et le second élément 202 sont réalisés en plastique moulé transparent.

Selon un mode de réalisation particulier, les dispositifs réfracteurs DR₁ sont des lentilles divergentes déformantes. Selon une première variante non représentée, la forme de ces lentilles déformantes peut varier d'une lentille à l'autre. Selon une deuxième variante telle que représentée sur la figure 1, différents sous-ensembles de ces lentilles déformantes présentent une forme particulière qui varie d'un sous-ensemble à l'autre.

Selon un mode de réalisation particulier, les dispositifs réfracteurs DR₂ sont des lentilles divergentes parfaites.

Le second élément 202 est rendu solidaire du plateau 100 par un anneau de maintien 300.

Le plateau 100, le premier élément 201, le second élément 202 et l'anneau 300 sont destinés à être maintenus ensemble dans un dispositif d'éclairage selon l'invention à l'aide d'une plaque de maintien 400 de forme correspondante à celle du plateau 100. A cet effet, la plaque 400 comprend :
- une zone périphérique 401 pourvue de trous TR₁ et adaptée à la zone périphérique 101 du plateau 100, et
- une zone centrale 402 pourvue de trous TR₂ et adaptée à la zone centrale 102 du plateau 100.

Pour des raisons de clarté de la figure, certains trous seulement sont signalés par la référence TR₁ ou TR₂.

Le nombre de trous TR₁ correspond au nombre de dispositifs réfracteurs DR₁ et le nombre de trous TR₂ correspond au nombre de dispositifs réfracteurs DR₂, de façon à ce que lorsque tous les éléments du dispositif d'éclairage qui viennent d'être décrits sont assemblés ensemble, les trous TR₁ coopèrent respectivement avec les dispositifs réfracteurs DR₁ et les trous TR₂ coopèrent respectivement avec les dispositifs réfracteurs DR₂.

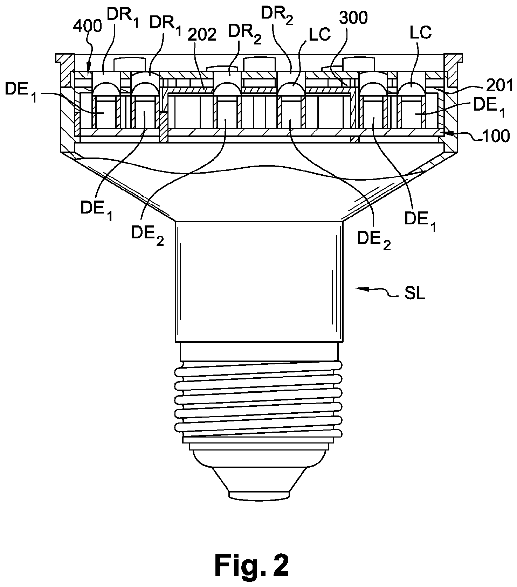

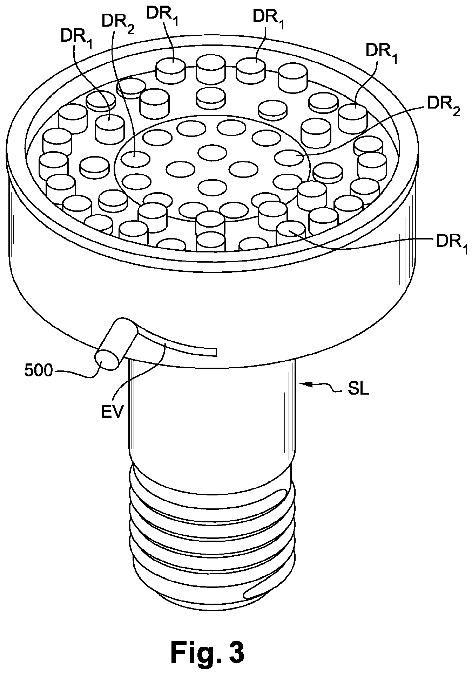

Un tel assemblage est représenté en coupe sur la figure 2 où ont été reportés les mêmes signes de référence que ceux de la figure 1. Cet assemblage peut avantageusement être monté sur un support de lampe SL de dimensions standard, tel que représenté sur les figures 2 et 3. Dans l'exemple représenté, il s'agit par exemple d'une lampe type spot, ce qui permet de monter cet assemblage facilement à des emplacements déjà prévus pour l'éclairage.

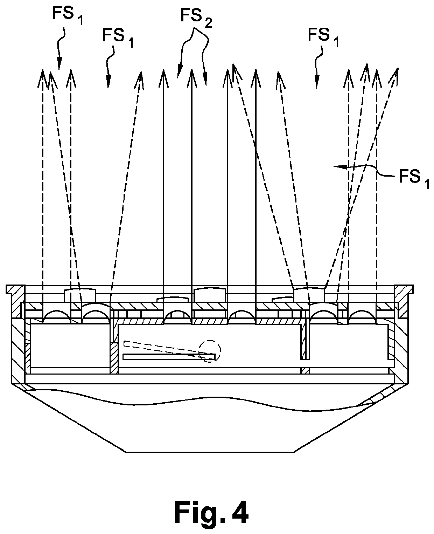

Grâce à un tel assemblage et à la configuration particulière des dispositifs réfracteurs DR₁ et DR₂, comme représenté sur la figure 4, le dispositif d'éclairage selon l'invention permet de produire :
- une pluralité de premiers faisceaux centraux FS₂ représentés en traits pleins, chacun desdits faisceaux FS₂ disposant d'une capacité de transmission de données et ayant un angle d'ouverture étroit,
- une pluralité de deuxièmes faisceaux périphériques FS₁ représentés en pointillés, chaque faisceau FS₁ étant concentré autour des premiers faisceaux centraux FS₂ et dédié uniquement à l'éclairage, certains desdits deuxièmes faisceaux présentant chacun un angle d'ouverture plus large que celui des premiers faisceaux et certains autres desdits deuxièmes faisceaux présentant chacun un angle d'ouverture similaire ou égal à celui des premiers faisceaux, les angles d'ouverture des deuxièmes faisceaux pouvant en outre varier en fonction du sous-ensemble de dispositifs réfracteurs DR₁ considéré.

L'effet produit par l'interférence entre les différents faisceaux FS₁ est la création de jeux d'ombres et de lumières permettent ainsi d'obtenir un éclairage ambiant satisfaisant tout en garantissant un transfert de données optimal vers un emplacement spécifique.

Selon une réalisation particulière, le premier élément 201 et le second élément 202 sont mobiles par translation selon un axe perpendiculaire au plateau 100. Les éléments 201 et 202 supportant des dispositifs optiques réfracteurs divergents, il est ainsi possible de faire varier la distance entre, d'une part les lentilles convergentes LC du plateau 100 et, d'autre part, les dispositifs optiques réfracteurs DR₁ du premier élément 201 et/ou les dispositifs optiques réfracteurs DR₂ du second élément 202, de façon à modifier les caractéristiques des faisceaux lumineux émis par les diodes électroluminescentes DE₁ et DE₂. La distance entre le plateau 100 et le premier élément 201 peut être différente de la distance entre le plateau 100 et le second élément 202. De cette manière, il est possible d'obtenir deux faisceaux concentriques de caractéristiques différentes en sortie du dispositif d'éclairage. En particulier, le dispositif d'éclairage permet de produire à la fois un faisceau étroit issu des sources lumineuses adaptées à la transmission de données et un faisceau plus large issu des sources lumineuses destinées à l'éclairage seul.

Selon un mode de réalisation particulier, le dispositif d'éclairage comporte un mécanisme de réglage qui est adapté pour appliquer une translation selon un axe perpendiculaire au plateau à au moins un des ensembles 201 et 202.

Un tel mécanisme de réglage permet à un utilisateur d'ajuster au moins un des faisceaux de lumière émis par le dispositif d'éclairage. Par exemple, le dispositif d'éclairage peut comporter une première molette permettant d'ajuster la distance entre le premier ensemble 201 de dispositifs réfracteurs DR₁ et les diodes électroluminescentes DE₁ et une seconde molette permettant d'ajuster la distance entre le second ensemble 202 de dispositifs réfracteurs DR₂ et les diodes électroluminescentes DE₂.

Les faisceaux émis par le dispositif d'éclairage peuvent ainsi être modifiés par un utilisateur. Par exemple, dans le cas où les sources lumineuses de la partie centrale sont adaptées pour transmettre des données alors que les sources de la partie périphérique sont adaptées pour une unique fonction d'éclairage, un utilisateur peut augmenter ou réduire l'écart entre le premier élément correspondant à la zone centrale et comportant des sources lumineuses adaptées à la transmission de données et les premières lentilles convergentes, afin d'obtenir un faisceau d'éclairage offrant un angle d'ouverture plus ou moins important et une répartition plus ou moins homogène du champ éclairé. Ainsi, un contraste plus ou moins fort entre les jeux d'ombres et de lumières produits par le dispositif d'éclairage selon l'invention est avantageusement obtenu.

Un exemple non limitatif d'un tel mécanisme de réglage est illustré sur les figures 1 et 3 et désigné par la référence 500. Le mécanisme de réglage 500 permet à un utilisateur d'ajuster la position des éléments 201 et 202 par rapport au plateau 100 tout en conservant l'alignement des diodes électroluminescentes DE₁, DE₂, les lentilles convergentes LC, les dispositifs optiques réfracteurs DR₁, DR₂.

Le mécanisme de réglage 500 comprend par exemple une tige de préhension solidaire de l'élément 201 et adaptée pour coulisser dans un évidement EV de forme oblongue, formé dans l'élément 201, de manière à rendre les éléments 201 et 202 solidaires en rotation tout en permettant aux éléments 201 et 202 de se déplacer l'un par rapport à l'autre selon une trajectoire perpendiculaire au plateau 100.

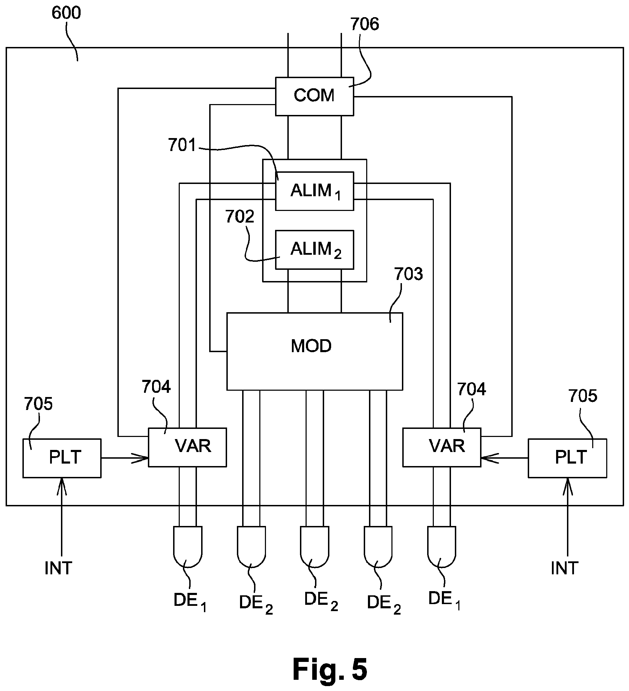

En référence maintenant à la figure 5, il est décrit de manière simplifiée et non limitative un assemblage de composants électroniques adapté pour fournir une fonction d'éclairage seul et une fonction d'éclairage avec transmission de données selon un mode particulier de réalisation de l'invention.

L'assemblage peut être intégré dans un boitier 600, comme par exemple dans un bulbe ou un culot d'ampoule. Les diodes électroluminescentes DE₁ du premier ensemble 201 précité, par exemple au nombre de deux, sont reliées à une alimentation électrique 701 (ALIM₁). Les diodes électroluminescentes DE₂ du second ensemble 202 précité, par exemple au nombre de trois, sont reliées à une alimentation électrique 702 (ALIM₂). Un composant de modulation 703 (MOD) adapté pour faire varier à haute fréquence l'éclairage fourni par les diodes électroluminescentes DE₂ de manière à transmettre des données par l'intermédiaire de la lumière visible est en outre relié entre l'alimentation électrique 702 (ALIM₂) et les diodes électroluminescentes DE₂. Comme déjà mentionné plus haut dans la description, il peut s'agir d'un microcontrôleur capable de fonctionner à haute fréquence et programmé à cet effet. Par exemple, le microcontrôleur RL78/I1A commercialisé par la société Renesas™ peut être adapté à une telle mise en œuvre. Ainsi, les diodes électroluminescentes DE₁ ne peuvent fournir qu'une fonction d'éclairage alors que les diodes électroluminescentes DE₂ peuvent, outre une fonction d'éclairage, offrir une fonction de transmission de données.

Selon l'invention, le dispositif d'éclairage comprend en outre un variateur 704 (VAR) de luminosité et/ou de couleur du ou des faisceaux lumineux émis par les diodes électroluminescentes DE₁, lequel variateur est adapté pour accentuer ou diminuer la visibilité de la zone de transmission de données délimitée par le ou les faisceaux lumineux émis par les diodes électroluminescentes DE₂. Il est fait en sorte qu'un tel dispositif variateur soit activé une fois que la distance entre le premier élément 201 supportant les dispositifs optiques réfracteurs DR₁ et les diodes électroluminescentes DE₁ a été réglée à l'aide du mécanisme 500, et que le premier élément 201 est ainsi maintenu en position fixe de réglage.

Un tel variateur 704 permet de réguler et de faire varier de façon continue, individuelle ou encore groupée, l'alimentation des diodes électroluminescentes DE₁.

Selon un mode de réalisation particulier, le dispositif d'éclairage comprend en outre un dispositif de pilotage 705 (PLT) du variateur 704 de luminosité et/ou de couleur. Le dispositif de pilotage 705 est adapté pour régler un ou plusieurs paramètres de variation de luminosité et/ou de couleur appliqués par le dispositif variateur 704.

De tels paramètres sont par exemple :
- le séquencement de la variation de luminosité et/ou de couleur du ou des faisceaux lumineux émis par les diodes électroluminescentes DE₁, des types ou modes de séquencement pouvant être prédéterminés,
- la vitesse d'exécution du séquencement, des types ou modes de vitesse d'exécution pouvant être prédéterminés,
- l'amplitude de la variation de luminosité et/ou de couleur du ou des faisceaux lumineux émis par les diodes électroluminescentes DE₁, des types ou modes d'amplitude pouvant être prédéterminés,
- etc...

Selon un mode de réalisation particulier, le dispositif de pilotage 705 peut être doté d'une interface (INT) matérielle ou logicielle qui permet à un gestionnaire du dispositif d'éclairage de sélectionner manuellement ou à distance les différents types ou modes de séquencement, d'amplitude ou de vitesse.

Un tel agencement permet ainsi de disposer d'une large palette de variations possibles à appliquer audit ou auxdits faisceaux lumineux émis, sans nécessiter un quelconque déplacement des diodes électroluminescentes DE₁. En faisant varier un ou plusieurs des paramètres précités, différents effets lumineux peuvent être produits, avec un impact sur l'éclairage de la zone de transmission de données, dont l'effet est d'améliorer ainsi l'identification de la zone de transmission de données.

Dans un mode de réalisation particulier, le dispositif d'éclairage comporte en outre un module de communication 706 (COM) adapté pour recevoir et interpréter des données reçues par l'intermédiaire d'un réseau de communication. Par exemple, le module de communication peut être une interface réseau mettant en oeuvre une technologie de transmission sur courant porteur (CPL pour Courant Porteur en Ligne), une interface Bluetooth ou encore Wifi.

Le module de communication 706 est relié au composant de modulation 703. De cette façon, le dispositif peut retransmettre dans le spectre de la lumière visible ou proche du visible des données reçues depuis un réseau de communication, tout en fournissant une fonction d'éclairage classique par l'intermédiaire des diodes électroluminescentes DE₂.

Le module de communication 706 est également relié au variateur 704. De cette façon, selon une première variante de réalisation, le variateur 704 est désactivé à l'établissement d'une session de communication par un terminal de communication, via le module de communication 706, dans la zone adaptée à la transmission de données, et respectivement activé à la fin de cette session.

Selon une deuxième variante de réalisation, le variateur 704 est désactivé dans le cas où un nombre de sessions de communication, via le module de communication 706, dans la zone adaptée à la transmission de données, est égal à un seuil prédéterminé et respectivement activé dans le cas où un nombre de sessions de communication, via le module de communication 706, dans la zone adaptée à la transmission de données, est inférieur audit seuil prédéterminé.

Selon une troisième variante de réalisation, le variateur 704 est désactivé dans le cas où le service de transmission de données, via le module de communication 706, dans la zone adaptée à la transmission de données, est indisponible, et respectivement activé dans le cas où ledit service de transmission de données est rendu disponible.

Il est ainsi possible, pour tout utilisateur qui souhaiterait se connecter dans la zone de transmission de données, d'identifier rapidement et distinctement la disponibilité ou l'indisponibilité de la zone de transmission de données.

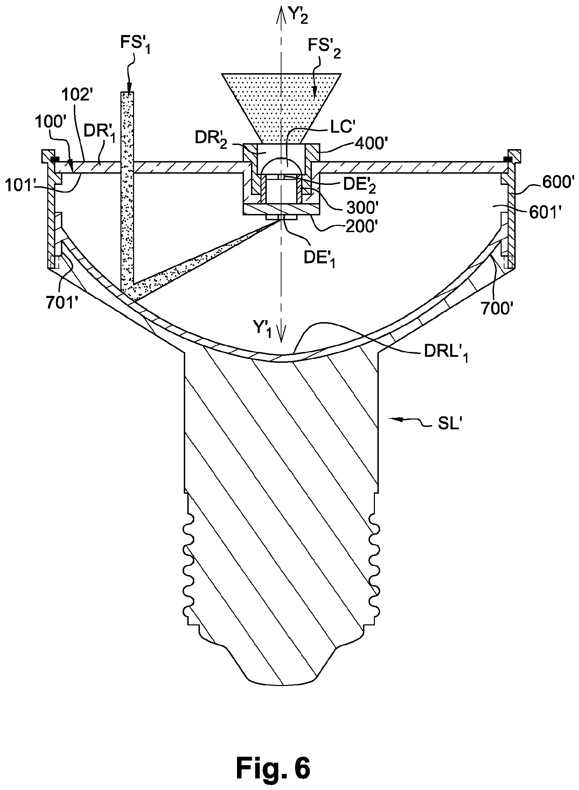

On va maintenant décrire en référence aux figures 6 et suivantes un dispositif d'éclairage selon un deuxième mode de réalisation de l'invention.

Un dispositif d'éclairage selon ce deuxième mode de réalisation comprend un assemblage de composants électroniques tel que celui décrit à la figure 5.

En référence à la figure 6, est représentée une vue en coupe d'un assemblage de différents éléments optiques et d'éclairage composant le dispositif d'éclairage selon le deuxième mode de réalisation de l'invention.

Comme dans le premier mode de réalisation, cet assemblage peut avantageusement être monté sur un support de lampe SL' de dimensions standard. Dans l'exemple représenté sur les figures 6 et suivantes, il s'agit par exemple d'une lampe type spot, ce qui permet de monter cet assemblage facilement à des emplacements déjà prévus pour l'éclairage.

Sur un plateau 100', par exemple de forme circulaire et comprenant un circuit imprimé, des sources lumineuses sont implantées sur chacune des faces 101' et 102' du plateau 100', comme par exemple des diodes électroluminescentes. La face interne 101' du plateau 100' supporte au moins une première diode électroluminescente DE'₁ dédiée uniquement à l'éclairage. Dans l'exemple représenté, la diode DE'₁ est montée de manière fixe sur une platine 200' fixée au centre de la face interne 101' du plateau 100' de telle façon que l'axe de diffusion Y'₁ de la lumière émise par la au moins première diode DE'₁ soit orienté vers l'intérieur du dispositif d'éclairage. La face externe 102' du plateau 100' supporte au moins une deuxième diode électroluminescente DE'₂ adaptée pour la transmission de données dans le spectre optique. Une telle diode DE'₂ est apte à transmettre des données par modulation de la lumière visible ou proche du visible. Pour cela, la diode DE'₂ est par exemple reliée à un composant de modulation adapté (non représenté), comme par exemple le microcontrôleur RL78/I1A commercialisé par la société Renesas™. Dans l'exemple représenté, la diode DE'₂ est montée de manière fixe sur un support 300' qui est lui-même fixé sur la platine 200' au centre de la face externe 102' du plateau 100', de telle façon que l'axe de diffusion Y'₂ de la lumière émise par la au moins une deuxième diode DE'₂ soit orienté vers l'extérieur du dispositif d'éclairage, dans le sens opposé à celui de l'axe de diffusion Y'₁.

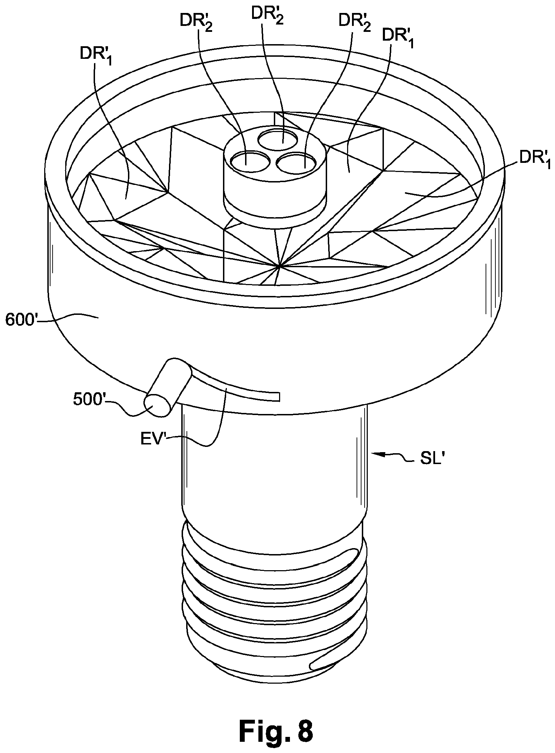

La face interne 101' du plateau 100' peut comprendre une ou plusieurs diodes électroluminescentes DE'₁. La face externe 102' du plateau 100' peut comprendre une ou plusieurs diodes électroluminescentes DE'₂. Dans l'exemple de réalisation de la figure 8, le dispositif d'éclairage comprend par exemple trois diodes électroluminescentes DE'₂.

Le plateau 100' est fixé sur le pourtour intérieur d'un boîtier 600' du dispositif d'éclairage.

Selon un autre mode de réalisation non représenté, les diodes électroluminescentes DE'₂ permettant de transmettre des données sont situées sur la face interne 101' du plateau 100' alors que les diodes électroluminescentes DE'₁ participant uniquement à l'éclairage sont situées sur la face externe 102' du plateau 100'.

Selon un autre mode de réalisation, les diodes électroluminescentes DE'₂ qui permettent de transmettre des données, participent également à l'éclairage.

Selon un mode de réalisation particulier, le plateau 100' est réalisé en matière plastique transparente.

Une lentille convergente LC' est montée sur le support 300' au centre du plateau 100', de façon à être positionnée en regard de la diode électroluminescente DE'₂ correspondante. Ainsi, la lumière émise par la diode électroluminescente DE'₂ est reçue par la lentille LC' et redirigée en un faisceau convergent FS'₂.

Dans le cas où le plateau 100' supporte plusieurs diodes électroluminescentes DE'₂, chacune desdites diodes est ainsi associée à une lentille convergente LC'.

Selon un mode particulier de réalisation, la lentille convergente LC' est directement intégrée dans la diode électroluminescente DE'₂. Il peut s'agir par exemple d'une diode électroluminescente disposant d'une optique intégrée ou d'une diode électroluminescente à laquelle est ajoutée une lentille, à l'aide d'un porte-lentille.

Conformément à l'invention, le dispositif d'éclairage comprend en outre un dispositif réfracteur DR'₂ disposé dans l'axe de la diode électroluminescente DE'₂.

Selon un mode de réalisation particulier, le dispositif réfracteur DR'₂ est réalisé en plastique moulé transparent.

Selon un mode de réalisation particulier, le dispositif réfracteur DR'₂ est une lentille divergente parfaite.

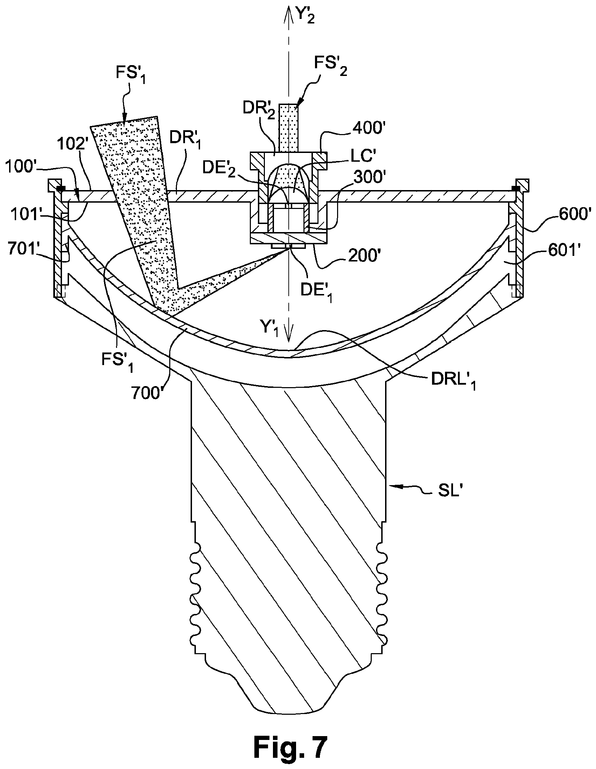

Selon une réalisation particulière, le dispositif réfracteur DR'₂ est mobile par translation selon l'axe Y'₂ perpendiculaire au plateau 100'. A cet effet, dans l'exemple représenté, le dispositif réfracteur DR'₂ est inséré dans un tube 400' monté par vissage au centre du plateau 100'. Comme représenté sur la figure 7 qui contient les mêmes signes de référence que ceux de la figure 6, il est ainsi possible de faire varier la distance entre, d'une part la lentille convergente LC' et, d'autre part, le dispositif optique réfracteur DR'₂, de façon à modifier les caractéristiques du faisceau lumineux émis par la diode électroluminescente DE'₂. Ainsi, plus on déplace le tube 400' le long de l'axe Y'₂, ce qui a pour effet d'éloigner le dispositif optique réfracteur DR'₂ de la lentille convergente LC', plus le faisceau lumineux FS'₂ issu de la diode électroluminescente DE'₂ devient étroit.

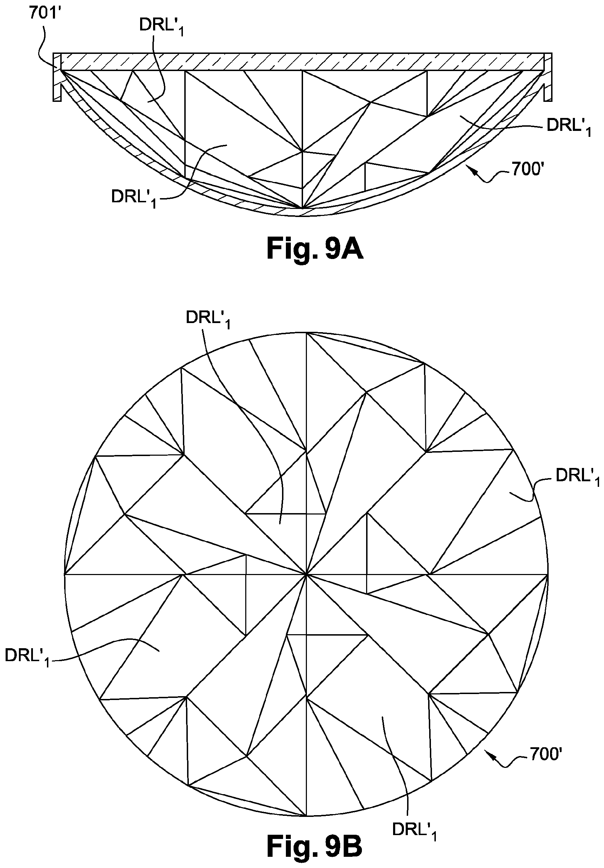

Conformément à l'invention, un dispositif réflecteur DRL'₁ est disposé devant la diode électroluminescente DE'₁ dédiée à l'éclairage. Comme représenté en détail sur les figures 9A et 9B, un tel dispositif réflecteur DRL'₁ est une plaquette constituée d'une matière réfléchissante, par exemple en matière plastique. Le dispositif déflecteur DRL'₁ appartient à un ensemble 700' de dispositifs réflecteurs DRL'₁ dont seulement certains sont indiqués sur les figures 9A et 9B pour des raisons de clarté. Les dispositifs réflecteurs DRL'₁ sont agencés les uns par rapport aux autres pour se conformer à la zone de diffusion de lumière indirecte émise par la diode électroluminescente DE'₁.

Selon une réalisation particulière, l'ensemble de dispositifs réflecteurs DRL'₁ est un miroir parabolique en matière plastique recouvert d'argenture. Le miroir est disposé de façon à former une paraboloïde de révolution par rapport auquel la ou les sources lumineuses DE'₁ sont relativement proches du foyer.

Selon une première variante non représentée, la forme de chacun de ces dispositifs réflecteurs DRL'₁ est différente. Selon une deuxième variante telle que représentée sur les figures 9A et 9B, différents sous-ensembles de ces dispositifs réflecteurs DRL'₁ présentent une forme particulière qui varie d'un sous-ensemble à l'autre.

Selon une réalisation particulière, l'ensemble 400' de dispositifs réflecteurs DRL'₁ est mobile par translation selon l'axe Y'₂ perpendiculaire au plateau 100'. A cet effet, dans l'exemple représenté sur les figures 6, 7, 9A et 9B, l'ensemble 700' de dispositifs réflecteurs DRL'₁ est pourvu d'une bordure 701' adaptée pour coulisser dans une gorge 601' formée dans le boîtier 600' du dispositif d'éclairage. Comme représenté sur la figure 7 qui contient les mêmes signes de référence que ceux de la figure 6, il est ainsi possible de faire varier la distance entre la diode électroluminescente DE'₁ dédiée à l'éclairage et l'ensemble 700' de dispositifs réflecteurs DRL'₁, de façon à modifier les caractéristiques du faisceau lumineux émis par la diode électroluminescente DE'₁. Ainsi, plus on déplace l'ensemble 700' de dispositifs réflecteurs DRL'₁ le long de l'axe Y'₂, ce qui a pour effet de rapprocher l'ensemble 700' de la diode électroluminescente DE'₁, plus le faisceau lumineux FS'₁ issu de la diode électroluminescente DE'₁ puis réfléchi par un dispositif réflecteur DRL'₁ présente un angle d'ouverture large.

Le dispositif d'éclairage selon le deuxième mode de réalisation comprend en outre un dispositif optique réfracteur DR'₁ qui est disposé sur le trajet du faisceau lumineux FS'₁ réfléchi par l'ensemble 700' de dispositifs réflecteurs DRL'₁. Le dispositif réfracteur DR'₁ est agencé de manière à diffuser au moins un faisceau lumineux FS'₁ concentré autour du faisceau lumineux FS'₂ émis par la ou les sources lumineuses dédiées à la transmission de données, l'angle d'ouverture du faisceau lumineux FS'₁ ayant un angle d'ouverture différent de celui du faisceau lumineux FS'₂.

Selon une réalisation particulière, un tel dispositif optique réfracteur DR'₁ est constitué par le plateau 100' de manière à optimiser la compacité de l'assemblage d'éléments optiques et d'éclairage du dispositif d'éclairage selon le deuxième mode de réalisation.

De cette manière, il est possible d'obtenir deux faisceaux concentriques de caractéristiques différentes en sortie du dispositif d'éclairage. En particulier :
- comme représenté en figure 6, le dispositif d'éclairage permet de produire à la fois un faisceau étroit issu des sources lumineuses destinées à l'éclairage seul et un faisceau plus large issu des sources lumineuses adaptées à la transmission de données, ou bien,
- comme représenté en figure 7, le dispositif d'éclairage permet de produire à la fois un faisceau large issu des sources lumineuses destinées à l'éclairage seul et un faisceau plus étroit issu des sources lumineuses adaptées à la transmission de données.

Selon un mode de réalisation particulier, le dispositif d'éclairage selon le deuxième mode de réalisation comporte un mécanisme de réglage qui est adapté pour appliquer une translation selon l'axe Y'₂ perpendiculaire au plateau 100' à l'ensemble 700' de dispositifs réflecteurs DRL'₁.

Un exemple non limitatif d'un tel mécanisme de réglage est illustré sur la figure 8 et désigné par la référence 500'. Le mécanisme de réglage 500' permet à un utilisateur d'ajuster la position de l'ensemble 700' de dispositifs réflecteurs DRL'₁ par rapport au plateau 100', tout en conservant l'alignement des diodes électroluminescentes DE'₁, DE'₂, et de la lentille convergente LC' associée à la diode DE'₂.

Le mécanisme de réglage 500' comprend par exemple une tige de préhension solidaire de l'ensemble 700' et adaptée pour coulisser dans un évidement EV' de forme oblongue, formé dans l'élément 700', de manière à permettre à l'élément 700' de se déplacer selon une trajectoire perpendiculaire au plateau 100'.

Grâce au mécanisme de réglage 500' et au tube fileté 400' dans lequel est monté le dispositif optique réfracteur DR'₂ associé à la diode électroluminescente DE'₂, les faisceaux émis par le dispositif d'éclairage peuvent ainsi être modifiés par un utilisateur afin d'obtenir un faisceau d'éclairage offrant un angle d'ouverture plus ou moins important et une répartition plus ou moins homogène du champ éclairé. Ainsi, un contraste plus ou moins fort entre les jeux d'ombres et de lumières produits par le dispositif d'éclairage selon l'invention est avantageusement obtenu.

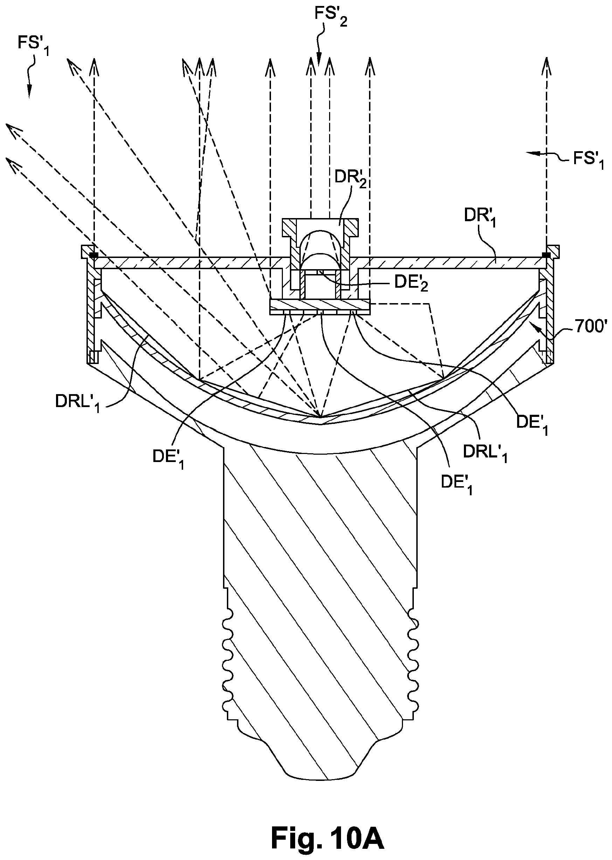

Grâce à l'assemblage qui vient d'être décrit ci-dessus en liaison avec les figures 6, 7, 8, 9A, 9B et à la configuration particulière des dispositifs réfracteurs DR'₁ et DR'₂, ainsi que de l'ensemble 700' de dispositifs réflecteurs DRL'₁, comme représenté sur les figures 10A à 10C, le dispositif d'éclairage selon le deuxième mode de réalisation permet de produire :
- au moins un premier faisceau central FS'₂ représenté en traits pleins, ledit faisceau FS'₂ disposant d'une capacité de transmission de données et ayant un angle d'ouverture étroit,
- une pluralité de deuxièmes faisceaux périphériques FS'₁ représentés en pointillés, chaque faisceau FS'₁ étant concentré autour dudit premier faisceau central FS'₂ et dédié uniquement à l'éclairage, certains desdits deuxièmes faisceaux présentant chacun un angle d'ouverture plus large que celui du premier faisceau FS'₂ et certains autres desdits deuxièmes faisceaux présentant chacun un angle d'ouverture similaire ou égal à celui du premier faisceau FS'₂.

L'effet produit par l'interférence entre les différents faisceaux FS'₁ est la création de jeux d'ombres et de lumières permettent ainsi d'obtenir un éclairage ambiant satisfaisant tout en garantissant un transfert de données optimal vers un emplacement spécifique.

Dans l'exemple représenté sur les figures 10A à 10C, le dispositif d'éclairage selon le deuxième mode de réalisation comprend trois diodes électroluminescentes DE'₁ dédiées à l'éclairage et une seule diode électroluminescente DE'₂ adaptée à la transmission de données.

Des jeux d'ombres et de lumières de caractéristiques différentes peuvent être produits selon que les diodes électroluminescentes DE'₁ sont toutes allumées ou que l'une et/ou l'autre seulement de ces diodes est allumée.
La figure 10A représente un premier type de jeux d'ombres et de lumières lorsque seule, une diode DE'₁ sur trois est allumée.

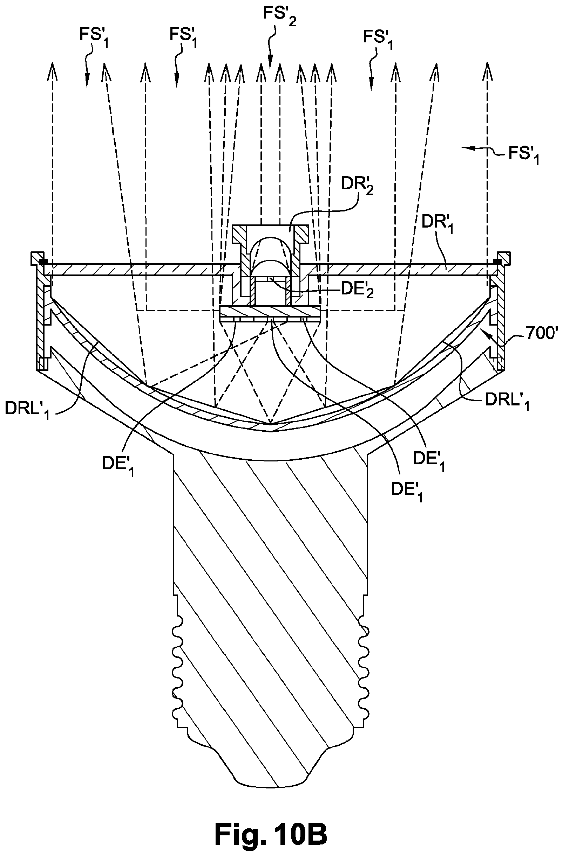

La figure 10B représente un deuxième type de jeux d'ombres et de lumières lorsque seule, une autre diode DE'₁ sur trois est allumée.

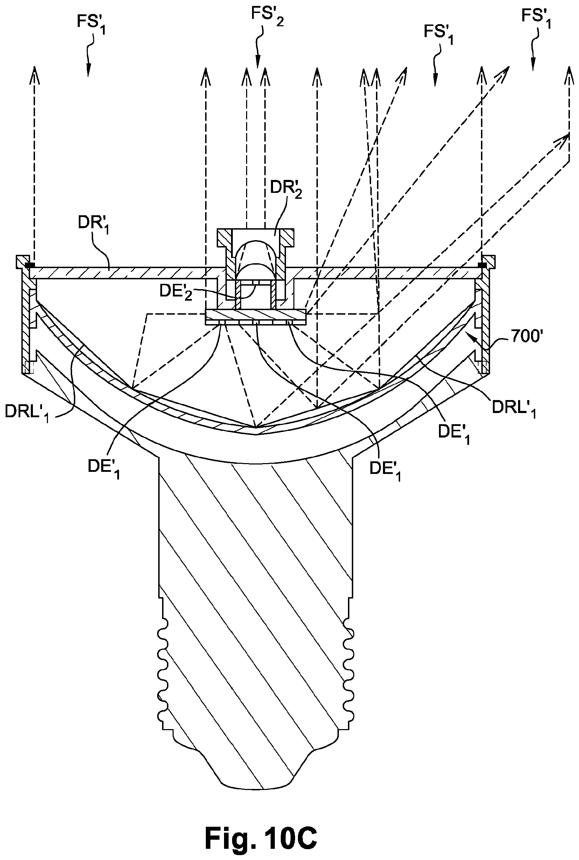

La figure 10C représente un troisième type de jeux d'ombres et de lumières lorsque seule, encore une autre diode DE'₁ sur trois est allumée.

Le dispositif d'éclairage qui vient d'être décrit ci-dessus trouve une utilisation particulièrement intéressante dans le cas d'un éclairage de produit dans une boutique. Le dispositif peut alors être configuré pour produire un premier faisceau d'éclairage focalisé sur le produit et un second faisceau plus large adapté à la transmission de données. Le faisceau d'éclairage permet ainsi de mettre en valeur un produit sur un présentoir alors que le faisceau de donnée, plus large, permet la transmission d'informations relatives au produit dans un périmètre configurable autour du produit.

Dans un contexte différent, le dispositif d'éclairage décrit ci-dessus peut être configuré de manière à procurer un faisceau d'éclairage large et un faisceau de transmission de données étroit. Cette configuration est adaptée par exemple à l'éclairage de bureaux dans un espace ouvert (« open space »), procurant à la fois un éclairage ambiant et une transmission de données sur une zone restreinte.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Dispositif d'éclairage comprenant :
- au moins une première source lumineuse (DE₁; DE'₁), dédiée à l'éclairage,
- au moins une deuxième source lumineuse (DE₂; DE'₂) dédiée à la transmission de données par modulation de la lumière,
- des premier et deuxième dispositifs optiques réfracteurs (DR₁, DR₂; DR'₁, DR'₂) positionnés respectivement par rapport auxdites première et deuxième sources lumineuses, de façon à capter la lumière émise par lesdites sources et former respectivement des premier et deuxième faisceaux lumineux distincts, ledit deuxième faisceau lumineux délimitant une zone adaptée pour la transmission de données,
le dispositif d'éclairage étant **caractérisé en ce qu'**il comporte un dispositif variateur (704) de luminosité et/ou de couleur du premier faisceau lumineux, qui est activé pour identifier la disponibilité d'un service de transmission de données fourni dans la zone de transmission, au moyen d'une variation de luminosité et/ou de couleur du premier faisceau lumineux qui produit des effets lumineux pour accentuer ou diminuer la visibilité du contour de la zone de transmission de données délimitée par ledit deuxième faisceau lumineux, le dispositif variateur étant configuré pour être désactivé lorsque le service de transmission de données fourni dans la zone de transmission n'est pas disponible.

2. Dispositif d'éclairage selon la revendication 1, dans lequel le dispositif variateur de luminosité et/ou de couleur du premier faisceau lumineux est désactivé à l'établissement d'une session de communication, par un terminal de communication, dans la zone adaptée à la transmission de données, et respectivement activé à la fin de ladite session.

3. Dispositif d'éclairage selon la revendication 1, dans lequel le dispositif variateur de luminosité et/ou de couleur du premier faisceau lumineux est désactivé dans le cas où un nombre de sessions de communication dans la zone adaptée à la transmission de données est égal à un seuil prédéterminé et respectivement activé dans le cas où un nombre de sessions de communication dans la zone adaptée à la transmission de données est inférieur audit seuil prédéterminé.

4. Dispositif d'éclairage selon la revendication 1, dans lequel le dispositif variateur de luminosité et/ou de couleur du premier faisceau lumineux est désactivé dans le cas où le service de transmission de données dans la zone adaptée à la transmission de données est indisponible et respectivement activé dans le cas où ledit service de transmission de données est rendu disponible.

5. Dispositif d'éclairage selon l'une quelconque des revendications 1 à 4, comprenant en outre un dispositif de pilotage (705) du dispositif variateur de luminosité et/ou de couleur du premier faisceau lumineux, qui est adapté pour régler un ou plusieurs paramètres de variation de luminosité et/ou de couleur appliqués par le dispositif variateur.

6. Dispositif d'éclairage selon l'une quelconque des revendications 1 à 5, comprenant un plateau (100) qui comporte une zone centrale (102) et une zone périphérique (101) et dans lequel :
- un premier ensemble (202) de sources lumineuses est agencé dans la zone centrale,
- un second ensemble (201) de sources lumineuses est agencé dans la zone périphérique,
les sources lumineuses (DE₁) d'un des ensembles étant dédiées à l'éclairage et les sources lumineuses (DE₂) de l'autre ensemble étant dédiées à la transmission de données par modulation de la lumière,
un dispositif optique réfracteur (DR₁ ou DR₂) étant positionné devant chaque source lumineuse.

7. Dispositif d'éclairage selon la revendication 6, dans lequel au moins deux dispositifs réfracteurs positionnés devant respectivement deux sources lumineuses dédiées à l'éclairage sont de type différent.

8. Dispositif d'éclairage selon l'une quelconque des revendications 1 à 5, comprenant un plateau (100') sur lequel sont montées :
- au moins une source lumineuse (DE'₂) dédiée à la transmission de données par modulation de la lumière, devant laquelle est positionné un dispositif optique réfracteur (DR'₂), l'axe de diffusion de la lumière émise par ladite au moins une source étant orienté vers l'extérieur du dispositif d'éclairage,
- au moins une source lumineuse (DE'₁) dédiée à l'éclairage, devant laquelle est positionné un dispositif optique réflecteur (DRL'₁), l'axe de diffusion de la lumière émise par ladite au moins une source lumineuse dédiée à l'éclairage étant orienté dans le sens opposé à l'axe de diffusion de la lumière émise par ladite au moins une source lumineuse dédiée à la transmission de données par modulation de la lumière.

9. Dispositif d'éclairage selon la revendication 8, comprenant en outre un dispositif optique réfracteur (DR'₁) qui est disposé sur le trajet d'au moins un rayon lumineux réfléchi par le dispositif réflecteur (DRL'₁) positionné devant ladite au moins une source lumineuse dédiée à l'éclairage.

10. Dispositif d'éclairage selon l'une quelconque des revendications 8 à 9, dans lequel le plateau du dispositif d'éclairage est le dispositif réflecteur positionné devant ladite au moins une source lumineuse dédiée à l'éclairage.

## Patentansprüche

1. Beleuchtungsvorrichtung umfassend:
- mindestens eine erste Lichtquelle (DE₁; DE'₁), die zur Beleuchtung vorgesehen ist,
- mindestens eine zweite Lichtquelle (DE₂; DE'₂), die zur Datenübertragung durch Modulation des Lichts vorgesehen ist,
- eine erste und zweite optische Brechungsvorrichtung (DR₁, DR₂; DR'₁, DR'₂), die bezogen auf die erste und zweite Lichtquelle so positioniert sind, dass sie das Licht auffangen, das von den Quellen abgegeben wird, und ein erstes beziehungsweise zweites gesondertes Lichtbündel bilden, wobei das zweite Lichtbündel einen Bereich begrenzt, der für die Datenübertragung geeignet ist,
wobei die Beleuchtungsvorrichtung **dadurch gekennzeichnet ist, dass** sie eine Vorrichtung zur Änderung (704) der Helligkeit und/oder Farbe des ersten Lichtbündels aufweist, die aktiviert wird, um die Verfügbarkeit eines Datenübertragungsdienstes, der im Übertragungsbereich bereitgestellt wird, mittels einer Änderung der Helligkeit und/oder Farbe des ersten Lichtbündels zu erkennen, die Leuchteffekte erzeugt, um die Sichtbarkeit der Kontur des Datenübertragungsbereichs, der von dem zweiten Lichtbündel begrenzt wird, zu betonen oder zu mindern, wobei die Änderungsvorrichtung dazu ausgebildet ist, deaktiviert zu werden, wenn der Datenübertragungsdienst, der in dem Übertragungsbereich bereitgestellt wird, nicht verfügbar ist.

2. Beleuchtungsvorrichtung nach Anspruch 1, wobei die Vorrichtung zur Änderung der Helligkeit und/oder Farbe des ersten Lichtbündels beim Aufbau einer Kommunikationssitzung durch ein Kommunikationsendgerät in dem Bereich, der für die Datenübertragung geeignet ist, deaktiviert und beziehungsweise beim Ende der Sitzung aktiviert wird.

3. Beleuchtungsvorrichtung nach Anspruch 1, wobei die Vorrichtung zur Änderung der Helligkeit und/oder Farbe des ersten Lichtbündels in dem Fall deaktiviert wird, dass eine Anzahl von Kommunikationssitzungen in dem Bereich, der zur Datenübertragung geeignet ist, gleich einem vorbestimmtem Schwellenwert ist, und beziehungsweise in dem Fall aktiviert wird, dass eine Anzahl von Kommunikationssitzungen in dem Bereich, der zur Datenübertragung geeignet ist, niedriger als der vorbestimmte Schwellenwert ist.

4. Beleuchtungsvorrichtung nach Anspruch 1, wobei die Vorrichtung zur Änderung der Helligkeit und/oder Farbe des ersten Lichtbündels in dem Fall deaktiviert wird, dass der Datenübertragungsdienst in dem Bereich, der für die Datenübertragung geeignet ist, nicht verfügbar ist, und beziehungsweise in dem Fall aktiviert wird, dass der Datenübertragungsdienst verfügbar gemacht wird.

5. Beleuchtungsvorrichtung nach einem der Ansprüche 1 bis 4, ferner umfassend eine Steuerungsvorrichtung (705) der Vorrichtung zur Änderung der Helligkeit und/oder Farbe des ersten Lichtbündels, die geeignet ist, einen oder mehrere Helligkeits- und/oder Farbänderungsparameter einzustellen, die durch die Änderungsvorrichtung angewandt werden.

6. Beleuchtungsvorrichtung nach einem der Ansprüche 1 bis 5, umfassend eine Scheibe (100), die einen mittleren Bereich (102) und einen Randbereich (101) aufweist, und wobei:
- ein erster Satz (202) Lichtquellen im mittleren Bereich angeordnet ist,
- ein zweiter Satz (201) Lichtquellen im Randbereich angeordnet ist,
wobei die Lichtquellen (DE₁) eines der Sätze zur Beleuchtung vorgesehen sind und die Lichtquellen (DE₂) des anderen Satzes zur Datenübertragung durch Modulation des Lichts vorgesehen sind,
wobei eine optische Brechungsvorrichtung (DR₁ oder DR₂) vor jeder Lichtquelle positioniert ist.

7. Beleuchtungsvorrichtung nach Anspruch 6, wobei mindestens zwei Brechungsvorrichtungen, die vor jeweils zwei Lichtquellen positioniert sind, die zur Beleuchtung vorgesehen sind, unterschiedlicher Art sind.

8. Beleuchtungsvorrichtung nach einem der Ansprüche 1 bis 5, umfassend eine Scheibe (100'), auf der Folgendes montiert ist:
- mindestens eine Lichtquelle (DE'₂), die zur Datenübertragung durch Modulation des Lichts vorgesehen ist, vor der eine optische Brechungsvorrichtung (DR'₂) positioniert ist, wobei die Streuungsachse des Lichts, das von der mindestens einen Quelle abgegeben wird, zum Äußeren der Beleuchtungsvorrichtung gerichtet ist,
- mindestens eine Lichtquelle (DE'₁), die zur Beleuchtung vorgesehen ist, vor der eine optische Brechungsvorrichtung (DRL'₁) positioniert ist, wobei die Streuungsachse des Lichts, das von der mindestens einen Lichtquelle abgegeben wird, in die Richtung gerichtet ist, die der Streuungsachse des Lichts entgegengesetzt ist, das von der mindestens einen Lichtquelle abgegeben wird, die zur Datenübertragung durch Modulation des Lichts vorgesehen ist.

9. Beleuchtungsvorrichtung nach Anspruch 8, ferner umfassend eine optische Brechungsvorrichtung (DR'₁), die auf der Bahn mindestens eines Lichtstrahls angeordnet ist, der von der Brechungsvorrichtung (DRL'₁) reflektiert wird, die vor der mindestens einen Lichtquelle positioniert ist, die zur Beleuchtung vorgesehen ist.

10. Beleuchtungsvorrichtung nach einem der Ansprüche 8 bis 9, wobei die Scheibe der Beleuchtungsvorrichtung die Reflektorvorrichtung ist, die vor der mindestens einen Lichtquelle positioniert ist, die zur Beleuchtung vorgesehen ist.

## Claims

1. Lighting device comprising:
- at least one first light source (DE₁; DE'₁) for providing illumination,
- at least one second light source (DE₂; DE'₂) for transmitting data by modulating the light,
- first and second optical refractor devices (DR₁, DR₂; DR'₁, DR'₂) positioned, respectively, with respect to said first and second light sources so as to capture the light emitted by said sources and to form, respectively, distinct first and second light beams, said second light beam defining a zone suitable for the transmission of data,
the lighting device being **characterized in that** it includes a variator device (704) for varying the luminosity and/or the colour of the first light beam, which device is activated in order to identify the availability of a data transmission service provided in the transmission zone, by means of varying the luminosity and/or the colour of the first light beam that produces luminous effects for accentuating or decreasing the visibility of the edge of the data transmission zone defined by said second light beam, the variator device being configured to be deactivated when the data transmission service provided in the transmission zone is unavailable.

2. Lighting device according to Claim 1, wherein the variator device for varying the luminosity and/or the colour of the first light beam is deactivated upon the establishment of a communication session, by a communication terminal, in the zone suitable for the transmission of data, and activated, respectively, at the end of said session.

3. Lighting device according to Claim 1, wherein the variator device for varying the luminosity and/or the colour of the first light beam is deactivated in the case that a number of communication sessions in the zone suitable for the transmission of data is equal to a predetermined threshold, and activated, respectively, in the case that a number of communication sessions in the zone suitable for the transmission of data is lower than said predetermined threshold.

4. Lighting device according to Claim 1, wherein the variator device for varying the luminosity and/or the colour of the first light beam is deactivated in the case that the data transmission service in the zone suitable for data transmission is unavailable, and activated, respectively, in the case that said data transmission service is made available.

5. Lighting device according to any one of Claims 1 to 4, further comprising a driver device (705) for driving the variator device for varying the luminosity and/or the colour of the first light beam, which device is suitable for adjusting one or more luminosity and/or colour variation parameters applied by the variator device.

6. Lighting device according to any one of Claims 1 to 5, comprising a plate (100) that includes a central zone (102) and a peripheral zone (101) and wherein:
- a first set (202) of light sources is arranged in the central zone,
- a second set (201) of light sources is arranged in the peripheral zone,
the light sources (DE₁) of one of the sets being for providing illumination and the light sources (DE₂) of the other set being for transmitting data by modulating the light,
an optical refractor device (DR₁ or DR₂) being positioned in front of each light source.

7. Lighting device according to Claim 6, wherein at least two refractor devices positioned, respectively, in front of two light sources for providing illumination are of different types.

8. Lighting device according to any one of Claims 1 to 5, comprising a plate (100') on which the following are mounted:
- at least one light source (DE'₂) for transmitting data by modulating the light, in front of which an optical refractor device (DR'₂) is positioned, the scattering axis of the light emitted by said at least one source being oriented towards the exterior of the lighting device;
- at least one light source (DE'₁) for providing illumination, in front of which an optical reflector device (DRL'₁) is positioned, the scattering axis of the light emitted by said at least one light source for providing illumination being oriented in the opposite direction with respect to the scattering axis of the light emitted by said at least one light source for transmitting data by modulating the light.

9. Lighting device according to Claim 8, further comprising an optical refractor device (DR'₁) that is placed in the path of at least one light ray reflected by the reflector device (DRL'₁) positioned in front of said at least one light source for providing illumination.

10. Lighting device according to either of Claims 8 and 9, wherein the plate of the lighting device is the reflector device positioned in front of said at least one light source for providing illumination.
